# DEMANDE DE BREVET EUROPEEN

(11) **EP 1 746 672 A2**
(43) Date de publication de la demande: **24.01.2007**
(21) Numéro de dépôt: 06291161.5
(22) Date de dépôt: 18.07.2006
(51) Int. Cl.: H01M 2/10, H01M 6/50, H01M 10/50, F28F 3/06, F28F 21/06

(54) **Dispositif de régulation thermique**

(30) Priorité: 22.07.2005 FR 0507821
(71) Demandeur: SAFT, 93170 Bagnolet (FR)
(72) Inventeur: Rigobert, Gérard, 33370 Fargues St Hilaire (FR); Beldjoudi, Malik, 31100 Toulouse (FR)
(74) Mandataire: Hirsch & Associés

(57) **Abrégé**

Un dispositif de régulation thermique d'une pluralité d'enceintes comprenant une poche souple (1) comprenant au moins une cloison (4) délimitant au moins deux sections (4a, 4b) d'un chemin pour la circulation d'un fluide caloporteur, une section étant en contact avec au moins deux enceinte (5). L'invention réside dans la découverte que la présence de cloisons dans la poche permet une meilleure rigidité de la poche et une meilleure régulation de température des éléments de l'accumulateur. L'invention s'étend au procédé de fabrication d'un tel dispositif.

## Description

### DOMAINE TECHNIQUE

L'invention concerne un dispositif destiné à réguler la température d'une pluralité d'enceintes. Ce dispositif permet un meilleur contrôle de la température des enceintes et une réduction des écarts de température entre celles-ci. Ces enceintes peuvent être en particulier constituées par les boîtiers des éléments électrochimiques d'un accumulateur.

### ETAT DE LA TECHNIQUE

Un accumulateur (ou générateur électrochimique, ces deux termes étant équivalents) est classiquement composé d'un ou de plusieurs éléments électrochimiques. Il est généralement conçu pour fonctionner dans une plage de température dite nominale. L'utilisation d'un accumulateur hors de cette plage de température peut entraîner une limitation de ses performances ou son vieillissement prématuré. Par exemple, une charge menée à une température trop basse peut conduire à un accumulateur insuffisamment chargé. Une charge ou une décharge menées à une température excessive peuvent conduire à une dégradation rapide des composants de l'accumulateur. Même utilisé dans la plage nominale de température, un accumulateur fonctionnant à forte puissance sur une longue période génère une grande quantité de chaleur. Si cette chaleur n'est pas suffisamment dissipée par l'air ambiant, on peut observer un emballement thermique de l'accumulateur, voire son explosion.

Il est donc nécessaire de prévoir un dispositif de régulation thermique qui permette soit de réchauffer soit de refroidir les éléments d'un accumulateur.

Les documents WO 02/07249, JP 11-054157, US-B-6 228 524 et US-B-5 624 003 décrivent des dispositifs de régulation de température constitués d'une chemise d'eau rigide ("water jacket") qui comprend une enveloppe rigide dans laquelle un fluide caloporteur circule. Cette enveloppe est placée au contact de la paroi des éléments de l'accumulateur dont on veut réguler la température. La circulation du fluide caloporteur est assurée par une pompe. La chemise d'eau est en général connectée à un bain thermostatique qui permet selon les cas de réchauffer ou de refroidir les éléments.

Le document EP-A-1 261 065 décrit une chemise d'eau en matière plastique flexible. Cette chemise flexible s'adapte précisément au contour des éléments de l'accumulateur. Les échanges thermiques sont ainsi favorisés. Cependant, ce dispositif est difficile à mettre en application sur le plan industriel en raison du long cheminement de la chemise d'eau autour des éléments. D'autre part, les éléments situés aux deux extrémités du dispositif de refroidissement peuvent avoir des températures différentes en raison du réchauffement (ou du refroidissement) du fluide caloporteur par passage au contact des éléments. Cette différence de température est d'autant plus marquée que l'accumulateur comporte un nombre élevé d'éléments.

Il existe donc un besoin pour un dispositif de régulation de température qui résolve les problèmes mentionnés ci-dessus et en particulier un dispositif qui présente:
- un bon contact thermique entre le fluide caloporteur et la paroi des éléments de l'accumulateur, afin d'obtenir un échange thermique élevé,
- des écarts de température réduits entre les éléments de l'accumulateur,
- une bonne rigidité mécanique.

### RESUME DE L'INVENTION

A cet effet, l'invention propose un dispositif de régulation thermique d'une pluralité d'enceintes comprenant une poche souple comprenant au moins une cloison délimitant au moins deux sections d'un chemin pour la circulation d'un fluide caloporteur, une section étant en contact avec au moins deux enceintes. L'invention réside dans la découverte que la présence de cloisons dans la poche permet une meilleure rigidité de la poche et une meilleure régulation de la température de toutes les enceintes.

L'invention s'étend au procédé de fabrication d'un tel dispositif. Ce procédé comprend les étapes consistant à :
a) fournir deux feuilles d'un matériau souple,
b) souder les bords des deux feuilles pour former une poche souple, en laissant au moins deux portions du bord non soudées pour permettre l'entrée et la sortie d'un fluide caloporteur,
c) créer au moins une cloison dans la poche souple pour délimiter au moins deux sections d'un chemin pour la circulation du fluide caloporteur.

### BREVE DESCRIPTION DES FIGURES

La figure 1 est une représentation schématique d'une poche souple selon l'invention.
La figure 2 est une représentation schématique du positionnement de la poche souple selon l'invention par rapport aux éléments d'un accumulateur.
La figure 3 représente la variation de température des éléments d'un accumulateur utilisés au cours de cycles successifs de charge-décharge. Ces éléments sont refroidis par le dispositif de régulation thermique selon l'invention.
La figure 4 représente la variation de température des éléments d'un accumulateur utilisés au cours de cycles successifs de charge-décharge. Ces éléments sont refroidis par un dispositif de régulation thermique ne faisant pas partie de l'invention.

### EXPOSE DETAILLE DES MODES DE REALISATION DE L'INVENTION

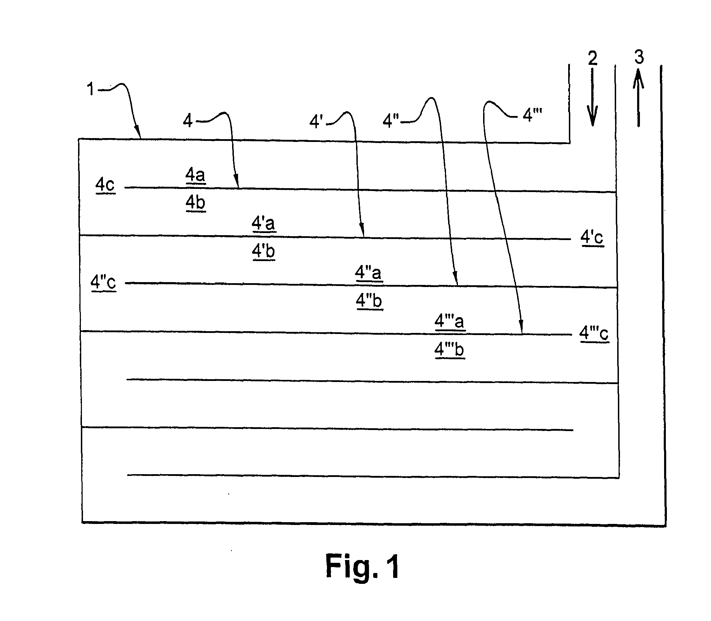

Le dispositif de régulation thermique selon l'invention va maintenant être décrit en faisant référence à la figure 1. Ce dispositif comprend une poche souple de forme parallélépipédique (1), deux conduits (2) et (3) pour l'entrée et la sortie d'un fluide caloporteur, et une pluralité de cloisons sensiblement parallèles (4, 4', 4", 4"', etc.) délimitant un chemin de circulation pour le fluide caloporteur.

Chaque cloison délimite deux sections (4a) et (4b) du chemin pour la circulation du fluide caloporteur. Sur la figure 1, la poche a une forme parallélépipédique et les cloisons sont sensiblement parallèles. Cependant, l'invention n'est pas limitée à une poche de cette forme et les cloisons peuvent présenter une ou plusieurs portions courbes.

La poche souple peut être en matière plastique, choisie dans le groupe comprenant le polychlorure de vinyle ou le polyuréthane. L'utilisation de polychlorure de vinyle ou de polyuréthane permet de réaliser une poche souple dont la paroi possède une faible épaisseur de l'ordre de 0,1 mm à 2 mm, en fonction de la nature du polymère employé.

L'utilisation d'un matériau plastique souple permet de réduire l'épaisseur de la poche souple afin d'assurer des échanges thermiques élevés entre le fluide caloporteur et la paroi des enceintes en contact avec la poche souple. Une poche souple de polyuréthane possédant une épaisseur de l'ordre de 0,1 mm à 2 mm est cependant apte à résister à une pression du fluide caloporteur d'environ 1 bar. La souplesse de la poche et sa faible épaisseur permettent à la poche de s'adapter étroitement au format et à la disposition des enceintes.

Le dispositif de régulation thermique peut être connecté à un bain thermostatique afin de contrôler la température du fluide caloporteur. Celui-ci est amené par une pompe au conduit d'entrée (2). Il traverse le volume de la poche souple en circulant le long des sections définies par les cloisons. Il sort de la poche par le conduit de sortie (3).

La circulation du fluide caloporteur à l'intérieur de la poche souple va maintenant être décrite.

Sur l'exemple de la figure 1, les cloisons sont orientées dans le sens de la longueur de la poche et s'étendent sur pratiquement la totalité de la longueur de la poche. Les conduits d'entrée et de sortie (2) et (3) sont adjacents. Cette disposition facilite la connexion de la poche souple à un bain thermostatique.

Le fluide caloporteur pénètre dans la poche souple par le conduit d'entrée (2). Il circule le long de la section (4a) et atteint la région (4c) correspondant à une interruption de la cloison (4). En cette région, le sens de circulation du fluide change. Le fluide circule alors le long de la section (4b) en direction de la région (4'c) correspondant à une interruption de la cloison (4'). La présence de zones d'interruption de la cloison permet donc un changement de sens de circulation du fluide caloporteur. Le fluide caloporteur continue son parcours à travers les sections suivantes puis sort de la poche par le conduit (3).

On va maintenant décrire le positionnement de la poche souple par rapport à la pluralité d'enceintes, dont la température doit être régulée. Les dimensions, le format et le matériau de chacune des enceintes ne sont pas limités. Les enceintes peuvent être de format identique ou différent, de dimensions identiques ou différentes et constituées de matériaux identiques ou différents. Dans ce qui suit, on détaille le positionnement de la poche souple par rapport à une pluralité d'enceintes constituée par les boîtiers des éléments d'un accumulateur. Le terme « enceinte » désigne alors le boîtier d'un élément de l'accumulateur.

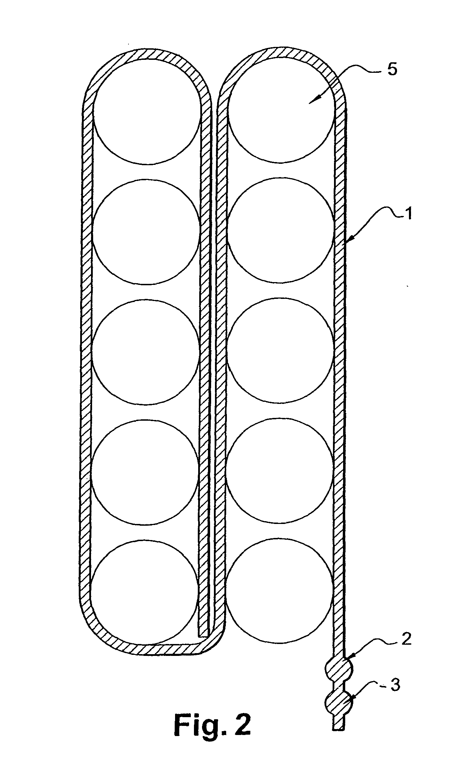

La figure 2 illustre le positionnement de la poche souple (1) par rapport aux enceintes (5). Les enceintes sont de format cylindrique, de dimensions identiques et disposées en deux rangées. La largeur de la poche souple est sensiblement égale à la hauteur des enceintes. La longueur de la poche souple est enroulée autour de la première rangée d'enceintes puis autour de la seconde rangée d'enceintes.

La longueur d'une cloison est choisie de façon à ce que les sections situées de part et d'autre de cette cloison soient au contact avec au moins deux enceintes. Dans un mode de réalisation préféré, une section est en contact avec toutes les enceintes.

La présence de plusieurs cloisons permet qu'au moins deux sections n'ayant pas de cloison commune, soient au contact avec la même enceinte. Ces cloisons peuvent être réparties de façon égale sur la hauteur de l'enceinte.

La présence de cloisons permet un passage du fluide caloporteur au contact de plusieurs enceintes et plusieurs passages du fluide caloporteur au contact d'une même enceinte. La présence de cloisons a pour avantage de réduire les écarts de température entre les enceintes situées aux deux extrémités de la longueur de la poche souple.

En effet, dans le document EP-A-1 261 065, le fluide caloporteur n'effectue qu'un seul passage au contact de toutes les enceintes. Les enceintes situées aux deux extrémités du dispositif de refroidissement peuvent avoir des températures différentes en raison du réchauffement progressif du fluide caloporteur provoqué par le contact du fluide avec chaque enceinte.

Dans le dispositif selon l'invention, le fluide caloporteur accumule moins de chaleur durant son trajet entre les deux enceintes extrêmes. Le dispositif selon l'invention permet donc d'obtenir des températures moins dispersées entre les enceintes situées aux deux extrémités du dispositif de refroidissement.

La présence de cloisons a un autre avantage : elle permet d'augmenter la rigidité mécanique de la poche souple par rapport à une poche souple ne présentant pas de cloisons. La poche se place donc facilement au contact des éléments électrochimiques.

Le dispositif selon l'invention présente également d'autres avantages :
- il ne crée pas de pertes de charge.
- il est flexible et s'adapte donc à différentes configurations d'enceintes.

Le dispositif de régulation thermique selon l'invention peut être fabriqué de la manière suivante :
a) On fournit deux feuilles d'un matériau souple,
b) On soude les bords des deux feuilles pour former une poche souple, en laissant au moins deux portions du bord non soudées pour permettre l'entrée et la sortie d'un fluide caloporteur,
c) On crée au moins une cloison dans la poche souple pour délimiter au moins deux sections d'un chemin pour la circulation du fluide caloporteur.

Dans un mode de réalisation, la cloison est réalisée par soudage. De préférence, la soudure des étapes b) et c) est une soudure haute-fréquence.

Selon une caractéristique, le matériau souple utilisé dans le procédé selon l'invention est une matière plastique, choisie dans le groupe comprenant le polychlorure de vinyle ou le polyuréthane.

Le dispositif selon l'invention est bien adapté à la régulation de la température d'éléments d'accumulateurs étanches tels que les éléments d'un accumulateur de type lithium-ion. Ceux-ci génèrent une grande quantité d'énergie lorsqu'ils fonctionnent en charge ou en décharge sous fort courant, comme c'est le cas dans les véhicules à propulsion hybride par moteur thermique et moteur électrique.

### EXEMPLES

Un premier dispositif de régulation thermique selon l'invention a été fabriqué de la façon suivante. Une poche souple a été formée par soudure haute fréquence des bords de deux feuilles de polyuréthane. Trois cloisons parallèles ont été fabriquées par soudure haute fréquence de la surface des deux feuilles de polyuréthane.

Dix éléments cylindriques d'accumulateur lithium-ion chargés à 60 % de leur capacité nominale ont été disposés en deux rangées de cinq éléments et les connexions électriques entre éléments ont été effectuées.

La poche souple a été disposée de façon à entourer la première rangée des cinq éléments puis la seconde rangée. Le fluide caloporteur effectue donc au total deux allers-retours soit quatre passages au contact d'un même élément.

Un second dispositif de régulation thermique ne faisant pas partie de l'invention a été disposé de la même façon autour de dix éléments cylindriques d'accumulateurs disposés en deux rangées de cinq éléments. Ce dispositif comprend une poche rigide sans cloisons.

Les éléments subissent un test de cyclage comprenant des charges et décharges successives entre environ 3,45 V et 3,9 V, à une température ambiante de 25°C. Ces conditions de fonctionnement provoquent l'échauffement des éléments et le dispositif de régulation de température est utilisé pour les refroidir.

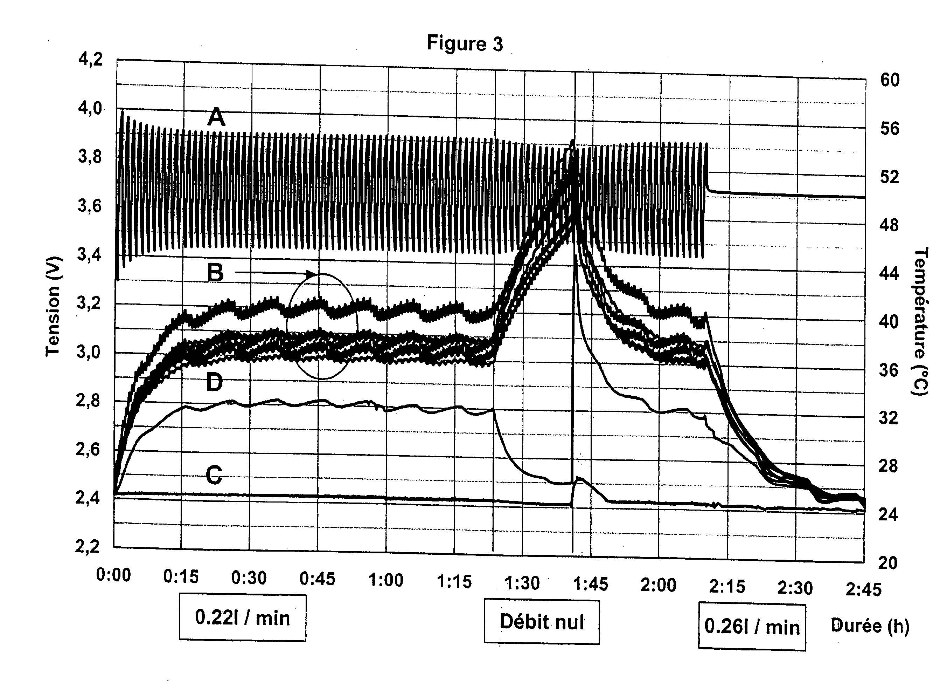

Le fluide caloporteur est mis en circulation dans le dispositif de régulation thermique à l'aide d'une pompe. Son débit est fixé à 0,22L/min jusqu'à environ 1hr 20min après le début du test. Il est nul entre 1hr 20min et 1hr 40min ; puis il est de 0,26L/min jusqu'à la fin du test (figure 3).

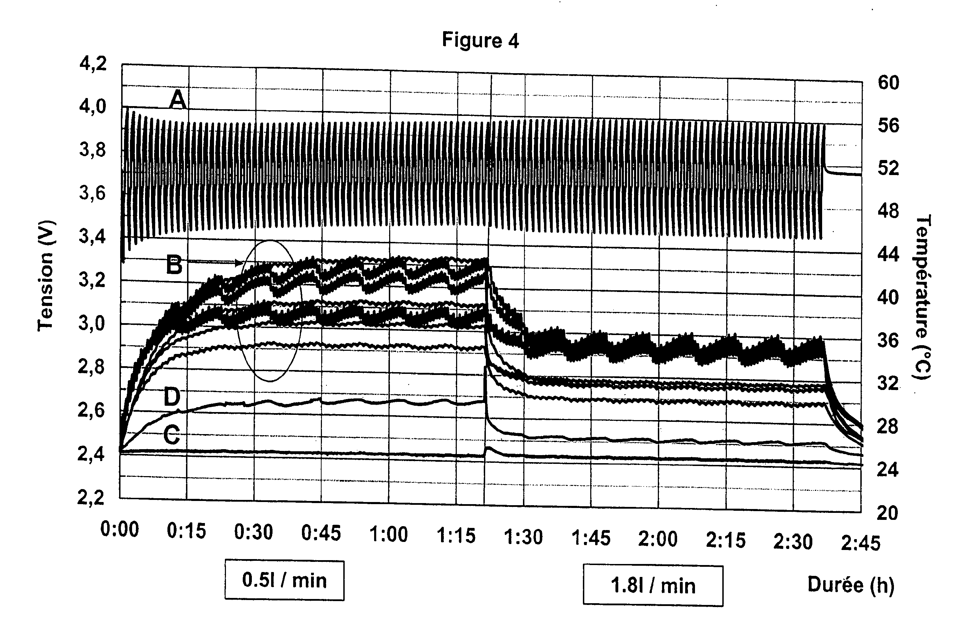

Le débit du fluide caloporteur dans le dispositif de régulation thermique ne faisant pas partie de l'invention est fixé à 0,50L/min jusqu'à environ 1hr 20min après le début du test, puis il est fixé à 1,8L/min jusqu'à la fin du test (figure 4).

Au cours de ce test, sont mesurées :
- la tension d'un des éléments (Courbe A),
- la température des éléments et des connexions (groupe de courbes B),
- la température d'eau à l'entrée de la poche (Courbe C),
- la température d'eau à la sortie de la poche (Courbe D).

On constate que les températures des éléments et des connexions refroidies par le dispositif selon l'invention vont de 36 à 40°C pour un débit de 0,22 ou 0,26 L/min alors que les températures des éléments et des connexions refroidies par le dispositif ne faisant pas partie de l'invention, vont de 34 à 42°C pour un débit de 0,5 L/min, le débit de 0,5 L/min étant a priori plus favorable au bon refroidissement des éléments.

Ces résultats montrent d'une part que les températures des éléments et des connexions refroidies par le dispositif selon l'invention sont moins dispersées que les températures des éléments et des connexions refroidies par le dispositif ne faisant pas partie de l'invention (36-40°C au lieu de 34-42°C). Ils montrent d'autre part que la température maximale relevée est plus faible dans le cas des éléments refroidis par le dispositif selon l'invention (40°C au lieu de 42°C pour le dispositif ne faisant pas partie de l'invention, et avec un débit de fluide caloporteur supérieur).

Le présent mode de réalisation et les figures doivent être considérées comme ayant été présentés à titre illustratif et non restrictif, et l'invention n'est pas censée être limitée à des éléments d'accumulateur. En particulier, l'invention peut également s'appliquer pour contrôler la température de toute enceinte nécessitant une régulation de température, telle que par exemple une enceinte de réacteur chimique.

## Revendications

1. Dispositif de régulation thermique d'une pluralité d'enceintes, comprenant une poche souple (1) comprenant au moins une cloison (4) délimitant au moins deux sections (4a, 4b) d'un chemin pour la circulation d'un fluide caloporteur, une section étant en contact avec au moins deux enceintes (5).

2. Dispositif selon la revendication 1, dans lequel une section est en contact avec toutes les enceintes.

3. Dispositif selon la revendication 1 ou 2, dans lequel, au moins deux sections n'ayant pas de cloison commune, sont en contact avec la même enceinte.

4. Dispositif selon l'une des revendications précédentes, dans lequel la poche souple est en matière plastique.

5. Dispositif selon la revendication 4, dans lequel la matière plastique est choisie dans le groupe comprenant le polychlorure de vinyle ou le polyuréthane.

6. Dispositif selon l'une des revendications précédentes, dans lequel une ou plusieurs enceintes sont des éléments d'un accumulateur.

7. Procédé de fabrication d'un dispositif de régulation thermique d'une pluralité d'enceintes comprenant les étapes consistant à :
a) fournir deux feuilles d'un matériau souple,
b) souder les bords des deux feuilles pour former une poche souple, en laissant au moins deux portions du bord non soudées pour permettre l'entrée et la sortie d'un fluide caloporteur,
c) créer au moins une cloison dans la poche souple pour délimiter au moins deux sections d'un chemin pour la circulation du fluide caloporteur.

8. Procédé selon la revendication 7, dans lequel la cloison est réalisée par soudage.

9. Procédé selon la revendication 8, dans lequel la soudure des étapes b) et c) est une soudure haute fréquence.

10. Procédé selon l'une des revendications 7 à 9, dans lequel la poche souple est en matière plastique.

11. Procédé selon la revendication 10, dans lequel la matière plastique est choisie dans le groupe comprenant le polychlorure de vinyle ou le polyuréthane.

12. Dispositif selon l'une des revendications 1 à 6 obtenu par le procédé selon l'une des revendications 7 à 11.

13. Utilisation d'un dispositif de régulation thermique pour réguler la température d'une pluralité d'enceintes, le dispositif comprenant une poche souple (1) comprenant au moins une cloison (4) délimitant au moins deux sections (4a, 4b) d'un chemin pour la circulation d'un fluide caloporteur, la poche étant disposée de manière à ce qu'une section soit en contact avec au moins deux enceintes (5).

14. Utilisation du dispositif selon la revendication 13, dans laquelle une section est en contact avec toutes les enceintes.

15. Utilisation du dispositif selon l'une des revendications 13 à 14, dans laquelle au moins deux sections n'ayant pas de cloison commune, sont en contact avec la même enceinte.

16. Utilisation du dispositif selon l'une des revendications 13 à 15, pour réguler la température des éléments d'un accumulateur.
